# DEMANDE DE BREVET EUROPEEN

(11) **EP 1 197 384 A1**
(43) Date de publication de la demande: **17.04.2002**
(21) Numéro de dépôt: 01402644.7
(22) Date de dépôt: 12.10.2001
(51) Int. Cl.: B60N 3/00, B60R 7/06

(54) **Tablette intégrée dans la planche de bord d'un véhicule automobile**

(30) Priorité: 12.10.2000 FR 0013043
(71) Demandeur: Renault, 92100 Boulogne Billancourt (FR)
(72) Inventeur: Gallinato-Contino, Roland, 83783 Flayosc (FR)

(57) **Abrégé**

La tablette intégrée comprend une partie fixé (50) formée en creux dans la planche de bord (1), et une pièce de recouvrement (53) destinée à venir recouvrir ladite partie fixe (50) en s'inscrivant dans la continuité de forme de la planche de bord (1). La pièce de recouvrement (53) comprend un élément de tablette mobile (55) destiné à venir prolonger la partie fixe (50) en position d'ouverture, et elle est articulée de chaque côté, en sa partie avant et en sa partie arrière, à respectivement un premier bras (56) et un second bras (57) montés pivotants à l'intérieur de la planche de bord (1), de manière à ce que la cinématique de la pièce de recouvrement (53) soit telle qu'elle reste horizontalement contenue dans des limites très proches du contour de la planche de bord (1).

## Description

La présente invention concerne l'aménagement de la planche de bord d'un véhicule, côté passager, à savoir l'intégration dans celle-ci d'une tablette rétractable pouvant servir à poser divers objets tels que feuilles ou blocs de papier, cartes, miroir, etc.

Des tablettes de planche de bord, associées à une case de rangement de type boîte à gants, sont connues notamment de par les brevets anglais GB 2 325 441 au nom du Groupe ROVER et GB 2 063 779 au nom de Talbot Motor. D'après le premier document GB 2 325 441, la tablette est montée horizontalement coulissante sur des rails pour être déplaçable entre une position de retrait à l'intérieur de la planche de bord, au-dessus de la boîte à gant, et une position de service où elle est totalement sortie de la planche de bord, saillant par rapport à celle-ci vers l'espace passager.

Le document GB 2 063 779 divulgue quant à lui une tablette associée à un tiroir intégré dans la planche de bord, laquelle tablette vient en recouvrement du tiroir lorsque celui-ci est sorti.

Dans les deux cas, la tablette en position de service empiète sur l'espace passager, ce qui d'une part peut nuire au confort et d'autre part impose des limitations pour la taille de la tablette elle-même. D'autre part, la saillie qu'elle forme alors sur la planche de bord va à l'encontre de la continuité et de l'adoucissement des formes qui sont recherchés d'un point de vue sécuritaire, et peut de plus constituer un obstacle au déploiement correct d'un sac gonflable de sécurité.

La présente invention procède d'une recherche menée en vue de solutionner ces inconvénients, autrement dit en vue d'apporter une réponse aux objectifs suivants :
prévoir une tablette qui s'intègre dans la planche de bord d'une façon telle qu'en position de retrait, elle ne constitue aucune discontinuité dans la forme extérieure de la planche de bord ;
prévoir une tablette qui bien que de taille adéquate pour servir de support à des objets tels que feuilles ou blocs de papier de format normal, soit très peu saillante par rapport à la planche de bord vers l'espace passager ; et prévoir également que ses pièces en mouvement lors du passage entre sa position de retrait et sa position de service ne soient tout au long de leur trajectoire que très peu saillantes vers l'espace passager.

A cet effet, l'invention consiste en une tablette intégrée dans la planche de bord d'un véhicule automobile, caractérisée en ce qu'elle comprend une partie fixe formée en creux dans ladite planche de bord, et une pièce de recouvrement destinée à venir recouvrir ladite partie fixe en s'inscrivant dans la continuité de forme de ladite planche de bord en position de fermeture de la tablette ; en ce que ladite pièce de recouvrement comprend un élément de tablette mobile destiné à venir prolonger ladite partie fixe de la tablette au-delà de son bord arrière en position d'ouverture de la tablette ; et en ce que ladite pièce de recouvrement est articulée de chaque côté, en sa partie avant et en sa partie arrière, à respectivement un premier bras et un second bras montés pivotants sur des axes transversaux respectifs à l'intérieur de la planche de bord, de manière à ce que la cinématique de ladite pièce de recouvrement entre ses positions d'ouverture et de fermeture soit telle que ladite pièce de recouvrement reste horizontalement contenue dans des limites très proches du contour de la planche de bord, autrement dit très peu saillante dans l'espace passager par rapport à la planche de bord.

Selon d'autres caractéristiques avantageuses de l'invention, la tablette peut être inclinée face à l'espace passager ; et peut être d'autre part associée à un compartiment de rangement ou vide-poches de la planche de bord.

Dans une forme de réalisation de l'invention, ladite pièce de recouvrement comprend, formés en une seule pièce, un volet de recouvrement et un panneau formé en retour sur le côté avant dudit volet, lequel panneau en retour constitue ledit élément de tablette mobile et rentre à l'intérieur de la planche de bord par une fente ménagée dans ladite partie fixe de tablette lors de la fermeture de ladite tablette.

Dans une autre forme de réalisation de l'invention, ladite pièce de recouvrement comprend un volet de recouvrement au bord avant duquel est articulé un panneau constituant ledit élément mobile de tablette, lequel est d'autre part monté pivotant autour d'un axe transversal situé juste au-dessus de ladite partie fixe de tablette, dans la région arrière de celle-ci, ledit panneau constituant ainsi également lesdits premiers bras d'articulation de ladite pièce de recouvrement.

Ces caractéristiques et avantages de l'invention, ainsi que d'autres, apparaîtront plus clairement dans la description suivante et les dessins joints, dans lesquels :
la Fig. 1 est une vue schématique en coupe longitudinale représentant en position de fermeture une première forme de réalisation de tablette intégrée dans une planche de bord de véhicule selon l'invention ;
la Fig. 2 est une même vue schématique en coupe longitudinale représentant cette tablette en position d'ouverture ; et
les Figs. 3 et 4 sont des vues similaires à celles des Figs. 1 et 2, représentant une seconde forme de réalisation de tablette intégrée selon l'invention.

Dans l'ensemble du texte, c'est-à-dire tant dans ce qui suit que ce qui précède, le véhicule est la référence implicite pour toutes les indications d'orientation et de positionnement dans l'espace.

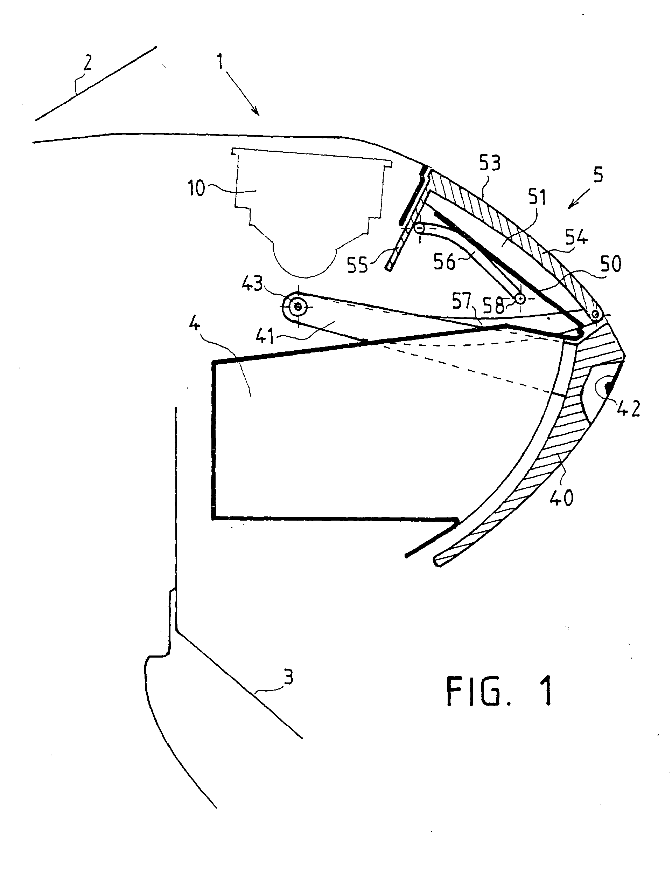

Considérant d'abord la Fig. 1, elle représente très schématiquement une planche de bord 1 et sa relation spatiale dans un véhicule avec le pare-brise 2 et la partie repose-pieds du plancher 3. La planche de bord est coupée verticalement au niveau de la place passager, dans la partie médiane d'une tablette intégrée selon l'invention repérée 5, laquelle est associée à un vide-poches 4 et disposée derrière un emplacement de sac gonflable de sécurité 10.

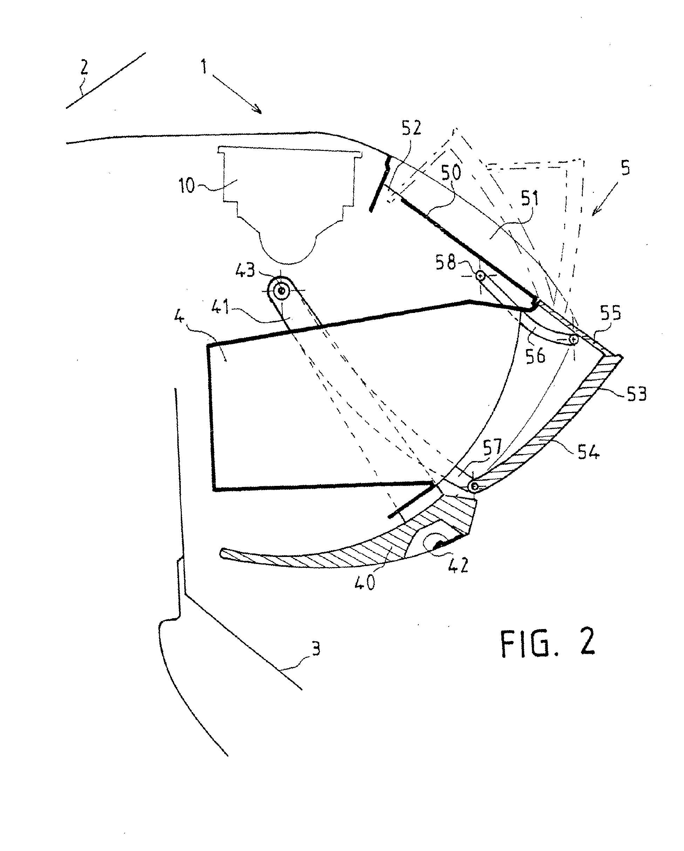

Le vide-poches 4 est un compartiment à l'intérieur de la planche de bord 1, ouvert vers l'arrière et pourvu d'un portillon de fermeture 40. Ce dernier est solidaire de bras latéraux 41 montés pivotant autour d'un axe transversal 43 à l'intérieur de la planche de bord 1. Le portillon 40 a un profil s'inscrivant dans celui de la planche de bord 1. La Fig. 1 le représente en position haute de fermeture, maintenu par un verrou libérable par une palette d'actionnement 42. Il s'ouvre en descendant le long du pourtour inférieur de la planche de bord 1, jusqu'à atteindre la position représentée à la Fig. 2.

Conformément à l'invention, la tablette intégrée 5 comprend une partie fixe 50, à savoir une partie avant inclinée face à l'espace passager, disposée au-dessus du vide-poches 4, et qui est représentée ici formée en une seule pièce avec lui. La partie fixe 50 est en fait une paroi globalement plane, décalée par rapport au contour externe de la planche de bord 1, de manière à y former un renfoncement rectangulaire 51 bordé latéralement et sur son côté avant.

La tablette 5 comprend en outre une pièce de recouvrement 53 qui vient se placer dans le renfoncement 51 en position de fermeture, et qui, en position d'ouverture, Fig. 2, vient occuper la position haute du portillon de vide-poches 40 après que celui-ci a été abaissé en ouverture. Dans cette position de la Fig. 2, un élément de tablette mobile 55 faisant partie de la pièce de recouvrement 53 vient en prolongement de la partie fixe de tablette 50, au-delà du bord arrière de celle-ci.

L'élément de tablette mobile 55 est un panneau rectangulaire formant un retour sensiblement à angle droit le long du bord avant d'un volet de recouvrement 54. Dans la position de fermeture de la Fig. 1, le volet de recouvrement 54 est encastré dans le renfoncement 51 formé par la partie fixe de tablette 50, et il s'inscrit par son contour externe dans la continuité de forme de la planche de bord 1. Le panneau 55 est alors quant à lui rentré à l'intérieur de la planche de bord 1, à travers une fente 52 ménagée le long du bord supérieur de la partie fixe de tablette 50.

De chaque côté de la pièce de recouvrement 53, des premier et second bras, respectivement 56 et 57, déterminent sa cinématique entre ses positions de fermeture de la Fig. 1 et d'ouverture de la Fig. 2. Le premier bras ou bras supérieur 56 est articulé en un point avant de la pièce de recouvrement 53, ici un point en position sensiblement médiane sur la face arrière du panneau 55, et par son autre extrémité, il est monté pivotant autour d'un axe transversal 58 à l'intérieur de la planche de bord 1. Le second bras ou bras inférieur 57 est articulé au coin arrière du volet de recouvrement 54, et il est monté pivotant par son autre extrémité autour d'un axe transversal à l'intérieur de la planche de bord, lequel est ici l'axe 43 des bras 41 du portillon de vide-poches 40. La pièce de recouvrement 53 est d'autre part maintenue en position de fermeture par un verrou de même type que celui du portillon de vide-poches 40.

L'agencement des bras 56 et 57 de la pièce de recouvrement 53 est tel que dans sa cinématique depuis sa position de fermeture (illustrée à la Fig. 2 par des représentations en traits interrompus de positions intermédiaires), le volet 54 se soulève d'abord de telle manière que le panneau 55 sorte de la fente 52 rapidement et en ne variant que très peu d'inclinaison, et qu'ensuite, le volet 54 reste contenu dans la limite d'empiètement maximum vers l'espace passager correspondant à la position d'ouverture, Fig. 2. Dans cette position, le volet 54 a pris la place du portillon 40 en fermeture du vide-poches 4.

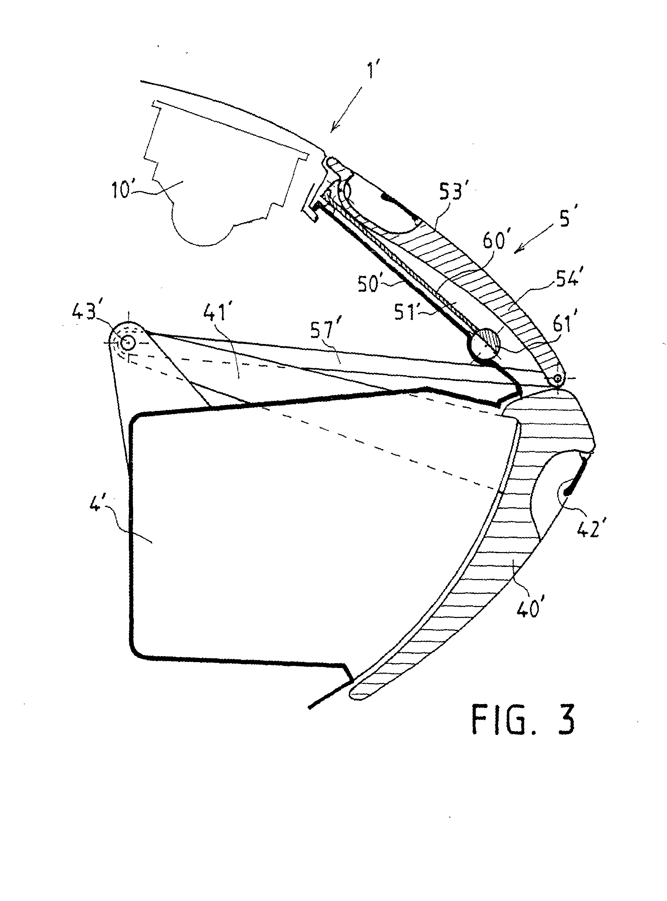

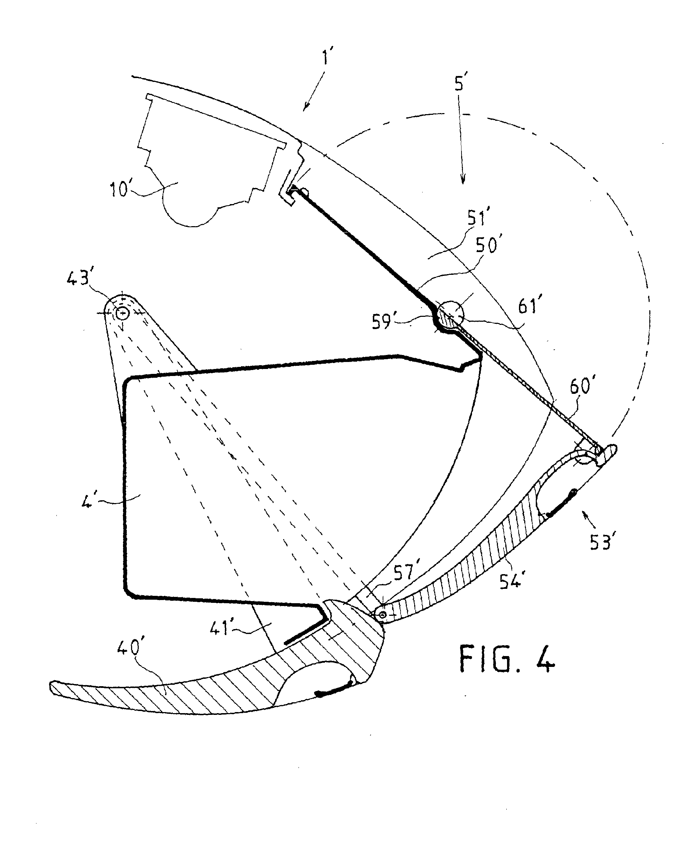

La tablette intégrée 5' des Figs. 3 et 4 présente une grande similitude de structure et de fonctionnement avec celle des Figs. 1 et 2, et pour cette raison, elle ne sera décrite dans le détail qu'en ses parties distinctes, tandis que les parties communes seront désignées par les mêmes références assorties du signe prime. Comme la tablette 5, elle est associée à un vide-poches 4' fermé par un portillon 40', et comprend une partie fixe 50' définissant un renfoncement 51' dans la planche de bord 1'.

La pièce de recouvrement 53' a la même fonction que la pièce de recouvrement 53 et comporte un volet de recouvrement similaire 54', mais elle en diffère par son élément de tablette mobile 60', ses moyens d'articulation et la cinématique qu'ils définissent.

Ici, l'élément de tablette mobile 60' est un panneau articulé d'une part le long du côté avant du volet de recouvrement 54', et articulé également au niveau de la région arrière de la partie de tablette fixe 50', autour d'un axe transversal 61'. En position de fermeture de la tablette 5', Fig. 3, le panneau 60' est appliqué devant l'axe 61' sur la partie de tablette fixe 50', interposé entre celle-ci et le volet de recouvrement 54'. En position d'ouverture, Fig. 4, le panneau 60' vient en prolongement de la partie de tablette fixe, derrière l'axe 61', au terme d'un pivotement de 180°. A cet effet, dans l'exemple de réalisation représenté, l'axe 61' qui fait partie intégrante du panneau 60' se réduit à un demi-axe le long du panneau 60', qui s'inscrit lors de l'ouverture de la tablette dans une gorge 59' ménagée dans la partie fixe de tablette 50' ; et d'autre part, par rapport à l'axe 61', le plan de la région arrière de la partie de tablette fixe 50' est décalé du plan de la région avant, normalement à eux et vers le bas, l'écart correspondant à l'épaisseur du panneau 60'.

En réalité, dans cette forme de réalisation des Figs. 3 et 4, il n'y a pas eu suppression des bras avant repérés 56 aux Figs. 1 et 2, mais ils sont ici constitués par le panneau 60' lui-même. Et le fait que la pièce de recouvrement 53' ne comporte pas comme dans l'exemple précédent de partie rentrant à l'intérieur de la planche de bord est un double avantage en ce que l'espace intérieur rendu disponible peut être utilisé à d'autres fins et en ce que la fente de pénétration est supprimée.

Un aménagement secondaire du système selon l'invention représenté dans les dessins, aux Figs. 3 et 4, consiste en une forme adéquate donnée au bord supérieur du portillon de vide-poches 40' pour qu'il puisse servir de repose-pieds en position basse. D'autres aménagements prévus n'ont pas été illustrés, tels des cavités dans le plan de la tablette pour le rangement des petits objets, un éclairage de la tablette, par exemple placé dans le bord avant et/ou les bords latéraux du renfoncement 51, 51', un système de pince à l'avant de la partie fixe de tablette 50, 50' pour retenir des documents.

Outre qu'il répond de façon très satisfaisante aux objectifs visés préalablement mentionnés, le système de tablette intégrée selon l'invention présente d'autres avantages qui méritent d'être soulignés, dont la possibilité qu'il offre d'envisager des dimensions de tablette lui permettant d'admettre des documents de grand format, voire même un ordinateur portable ; la robustesse et la maniabilité des moyens d'articulation de la tablette en comparaison de dispositifs à glissières ; la stabilité de la tablette en position d'ouverture.

## Revendications

1. Tablette intégrée dans la planche de bord d'un véhicule automobile, **caractérisée en ce qu'**elle comprend une partie fixe (50 ; 50') formée en creux dans ladite planche de bord (1 ; 1'), et une pièce de recouvrement (53 ; 53') destinée à venir recouvrir ladite partie fixe (50 ; 50') en s'inscrivant dans la continuité de forme de ladite planche de bord (1 ; 1') en position de fermeture de la tablette ; **en ce que** ladite pièce de recouvrement (53 ; 53') comprend un élément de tablette mobile (55 ; 60') destiné à venir prolonger ladite partie fixe (50 ; 50') de la tablette au-delà de son bord arrière en position d'ouverture de la tablette ; et **en ce que** ladite pièce de recouvrement (53 ; 53') est articulée de chaque côté, en sa partie avant et en sa partie arrière, à respectivement un premier bras (56) et un second bras (57 ; 57') montés pivotants sur des axes transversaux respectifs (43, 58 ; 43') à l'intérieur de la planche de bord (1 ; 1'), de manière à ce que la cinématique de ladite pièce de recouvrement (53 ; 53') entre ses positions d'ouverture et de fermeture soit telle que ladite pièce de recouvrement (53 ; 53') reste horizontalement contenue dans des limites très proches du contour de la planche de bord (1 ; 1'), autrement dit très peu saillante dans l'espace passager par rapport à la planche de bord (1 ; 1').

2. Tablette intégrée selon la revendication 1, **caractérisée en ce qu'**elle est inclinée face à l'espace passager.

3. Tablette intégrée selon la revendication 1 ou 2, **caractérisée en ce que** ladite pièce de recouvrement (53) comprend, formés en une seule pièce, un volet de recouvrement (54) et un panneau (55) formé en retour sur le côté avant dudit volet (54), lequel panneau (55) constitue ledit élément de tablette mobile et rentre à l'intérieur de la planche de bord (1) par une fente (52) ménagée dans ladite partie fixe de tablette (50) lors de la fermeture de la tablette.

4. Tablette intégrée selon la revendication 1 ou 2, **caractérisée en ce que** ladite pièce de recouvrement (53') comprend un volet de recouvrement (54') au bord avant duquel est articulé un panneau (60') constituant ledit élément de tablette mobile, lequel panneau (60') est d'autre part monté pivotant autour d'un axe transversal (61') situé juste au-dessus de ladite partie fixe de tablette (50'), dans la région arrière de celle-ci, le panneau (60') constituant ainsi également lesdits premiers bras d'articulation de ladite pièce de recouvrement (53').

5. Tablette intégrée selon l'une des revendications 1 à 4, **caractérisée en ce que** ladite partie de tablette fixe (50, 50') comporte des cavités destinées au rangement de petits objets.

6. Tablette intégrée selon l'une des revendications 1 à 5, **caractérisée en ce que** ladite partie de tablette fixe (50 ; 50') comporte un dispositif de pince pour la retenue de documents.

7. Tablette intégrée selon l'une des revendications 1 à 6, **caractérisée en ce que** la partie de tablette fixe (50 ; 50') définit un renfoncement (51; 51') dans la planche de bord (1 ; 1'), lequel renfoncement (51 ; 51') est pourvu d'un éclairage dans son bord avant et/ou ses bords latéraux.

8. Tablette intégrée selon l'une des revendications 1 à 7, **caractérisée en ce qu'**elle est associée à un compartiment de rangement ou vide-poches (4 ; 4') de la planche de bord (1 ; 1').

9. Tablette intégrée selon la revendication 8, **caractérisée en ce qu'**elle est associée à un compartiment de rangement ou vide-poches (4') pourvu d'un portillon de fermeture (40') s'ouvrant par pivotement vers le bas et dont le coté supérieur est conformé de manière à servir de repose-pieds lorsque le portillon (40') est en position basse d'ouverture.
